(19) **Europäisches Patentamt**
**European Patent Office**
**Office européen des brevets**

(11) **EP 2 776 693 B1**

(12) **FASCICULE DE BREVET EUROPEEN**

(45) Date de publication et mention
de la délivrance du brevet:
**08.11.2017 Bulletin 2017/45**

(21) Numéro de dépôt: **12773046.3**

(22) Date de dépôt: **17.09.2012**

(51) Int Cl.:
*F02D 41/00* (2006.01)    *F02D 41/18* (2006.01)
*F02D 41/14* (2006.01)

(86) Numéro de dépôt international:
**PCT/FR2012/052072**

(87) Numéro de publication internationale:
**WO 2013/068661 (16.05.2013 Gazette 2013/20)**

(54) **PROCÉDÉ ET SYSTÈME DE COMMANDE DE L'ACTIONNEUR D'UNE VANNE À PETITE OUVERTURE ET À DÉBIT RÉGULÉ**

VERFAHREN UND SYSTEM ZUR STEUERUNG DES BETÄTIGERS EINES VENTILS MIT KLEINER ÖFFNUNG UND GESTEUERTER AUSGABE

METHOD AND SYSTEM FOR CONTROLLING THE ACTUATOR OF A SMALL-OPENING AND REGULATED-DELIVERY VALVE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.11.2011 FR 1160096**

(43) Date de publication de la demande:
**17.09.2014 Bulletin 2014/38**

(73) Titulaire: **Renault S.A.S.**
**92100 Boulogne-Billancourt (FR)**

(72) Inventeurs:
- **PETILLON, Yohann**
  **F-78180 Montigny Le Bretonneux (FR)**
- **LOMBARDIN, Jacques-Olivier**
  **F-91600 Savigny Sur Orge (FR)**

(56) Documents cités:
**EP-A2- 1 467 076    DE-A1- 19 813 531**
**FR-A1- 2 753 488    FR-A1- 2 902 466**

Printed by Jouve, 75001 PARIS (FR)

**Description**

L'invention a pour domaine technique la commande de moteurs à combustion interne, et plus particulièrement, des moteurs à combustion interne de type diesel à volet d'admission d'air.

La commande de moteurs à combustion interne permet de réguler les quantités d'air et de carburant admises dans le moteur afin d'en optimiser le fonctionnement. Pour cela, différentes vannes et soupapes permettent de modifier la circulation de l'air frais, des gaz d'échappement et du carburant. Les procédés et systèmes de commande agissent sur les actionneurs de ces vannes et soupapes pour en commander le degré d'ouverture. Un exemple est décrit dans la demande de brevet FR 2 753 488. Toutefois, les vannes et soupapes sont des organes mécaniques sensibles qui doivent être commandés avec un certain soin afin d'éviter de les endommager. La fermeture trop vive des ces organes peut endommager le volet ou l'épaulement de la soupape en le choquant contre la butée correspondante. Ces sécurités ne peuvent pas être aisément intégrées aux procédés et systèmes employés pour déterminer le degré d'ouverture des vannes et soupapes. On emploie alors une régulation en cascade à deux étages.

Un premier étage régule un débit de fluide en émettant une consigne de position de l'actionneur en fonction de l'écart entre une consigne de débit et une mesure de débit. Le premier étage correspond ainsi à la partie des systèmes et procédés de régulation des fluides dans le moteur à combustion interne dédiés à la soupape ou à la vanne commandée.

Un deuxième étage régule la position de l'actionneur afin d'éviter un endommagement. Le deuxième étage émet généralement un signal de commande à destination de l'actionneur en fonction de la consigne de position de l'actionneur reçue du premier étage. Le deuxième étage permet de protéger l'actionneur lors de petits débattements. L'actionneur s'approche alors de butées pouvant endommager la soupape ou le volet. Le deuxième étage impose une vitesse d'accostage de l'actionneur sur sa butée et ne respecte donc plus la consigne de position de l'actionneur reçue du premier étage. En effet, lorsque le deuxième étage de régulation est activé pour de faibles débattements, l'évolution de la position de l'actionneur ne correspond plus à la consigne de position reçue du premier étage à cause de la modification de la vitesse de fermeture de l'actionneur. L'actionneur se ferme généralement plus lentement que requis par la consigne issue du premier étage.

L'actionneur fermé sous l'action du deuxième étage de régulation se voit contraint à s'ouvrir par le premier étage de régulation afin d'obtenir un débit conforme à la consigne. Toutefois, pour des débits très faibles, l'ouverture de l'actionneur est considérée comme trop faible par le deuxième étage de régulation. Ce dernier impose une ouverture au delà de la limite de 2%. La nouvelle position est alors considérée comme permettant un débit trop important par le premier étage qui force une réduction de l'ouverture. La réduction de l'ouverture mène à nouveau à une commande de la vitesse d'accostage de l'actionneur sur sa butée par le deuxième étage. Les étapes décrites ci-dessus se répètent tant qu'une consigne de débit plus important n'est pas émise par le premier étage.

Il nait de la succession des ouvertures et fermetures décrite ci-dessus une situation oscillante qui ne permet pas d'obtenir la consigne instantanée requise. Ainsi, il apparait un phénomène oscillant dans le cas où la régulation à deux étages nécessite de réguler une ouverture de l'actionneur entre 0% et 2%. Ceci est très problématique pour l'agrément du conducteur qui ressent des à-coups et entend ces variations via le changement du bruit de combustion.

Il existe donc un besoin de supprimer les oscillations des actionneurs de soupapes ou de volets alors qu'une régulation d'air à faible débit est demandée.

Selon un mode de réalisation, on propose un procédé de commande de l'actionneur d'une vanne de recirculation partielle des gaz d'échappement dans un moteur à combustion interne muni d'au moins un moyen de mesure du débit d'air admis et d'au moins un circuit de recirculation partielle des gaz d'échappement comprenant ladite vanne, le procédé de commande comprenant des étapes au cours desquelles on compare une mesure de débit à une consigne de débit, et on commande l'ouverture de l'actionneur afin d'annuler l'écart entre la mesure de débit et la consigne de débit. Le procédé comprend en outre les étapes suivantes. Lorsque la commande de l'ouverture de l'actionneur est inférieure à un premier seuil prédéfini, et que l'écart entre la mesure de débit et la consigne de débit est supérieur à un deuxième seuil, on interrompt la régulation de débit, et pour interrompre la régulation de débit, on arrête la régulation et on émet une consigne de position de l'actionneur menant à la fermeture de la vanne, et lorsque l'écart entre la mesure de débit et la consigne de débit est inférieur au deuxième seuil et que la régulation a été interrompue, on reprend la régulation de débit.

Le deuxième seuil peut dépendre de la vitesse de rotation du moteur et de la mesure de débit d'air admis.

On peut fermer la vanne avec une vitesse variant selon une cartographie mémorisée.

On peut déterminer une vitesse de fermeture de la vanne variant en fonction du temps et on peut fermer la vanne en appliquant la variation de vitesse.

Selon un autre mode de réalisation, on propose un système de commande de l'actionneur d'une vanne de recirculation partielle des gaz d'échappement dans un moteur à combustion interne pour véhicule automobile muni d'au moins un moyen de mesure du débit d'air admis et d'au moins un circuit de recirculation partielle des gaz d'échappement comprenant ladite vanne, le moteur à combustion interne étant commandé par un moyen de commande des gaz admis apte à déterminer une consigne d'air admis,

le système de commande comprenant un moyen de comparaison de la mesure de débit à une consigne de débit apte à émettre une consigne de position de l'actionneur, et un moyen de commande de l'actionneur apte, d'une part, à réguler l'écart entre une mesure de position de l'actionneur et la consigne de position de l'actionneur et, d'autre part, à empêcher l'endommagement de la vanne.

Le système de commande comprend en outre un moyen de détermination d'une interruption de régulation et un moyen de détermination d'une reprise de régulation reliés en sortie à un moyen de commande de la régulation de débit, aptes à arrêter la régulation du moyen de commande de l'actionneur, à émettre une consigne de position de l'actionneur menant à la fermeture de la vanne et à reprendre la régulation du moyen de commande de l'actionneur.

Le moyen de détermination d'une interruption de régulation peut être apte à émettre un signal logique en fonction de la consigne de position de l'actionneur, de l'écart entre la consigne de débit et la mesure de débit et un premier seuil.

Le moyen de détermination d'une reprise de régulation peut être apte à émettre un signal logique en fonction de la comparaison de l'écart entre la mesure de débit et la consigne de débit à un deuxième seuil.

Le système peut comprendre un moyen de détermination du deuxième seuil en fonction de la vitesse de rotation du moteur et de la mesure de débit d'air admis.

Le système peut comprendre une cartographie mémorisée de la vitesse de fermeture de la vanne en fonction du temps.

Le système peut comprendre un moyen de détermination de la vitesse de fermeture de la vanne en fonction du temps.

Le système et le procédé de commande permettent de protéger la vanne et d'éviter les oscillations préjudiciables aux utilisateurs du véhicule.

D'autres buts, caractéristiques et avantages apparaîtront à la lecture de la description suivante donnée uniquement en tant qu'exemple non limitatif et faite en référence aux dessins annexés sur lesquels :

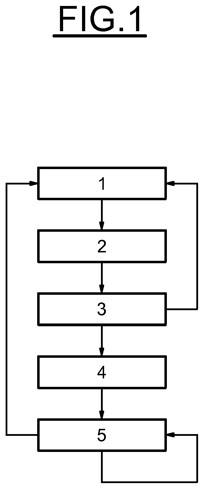

- la figure 1 illustre un procédé de commande selon l'invention, et
- la figure 2 illustre un système de commande selon l'invention.

Le procédé de commande est illustré dans le cadre de la commande de l'actionneur d'une vanne d'admission d'air d'un moteur à combustion interne de type diesel comprenant un circuit de recirculation partielle des gaz d'échappement (en langue anglaise « Exhaust Gaz Recirculation » ou EGR) à basse pression ainsi qu'un circuit EGR à haute pression. Toutefois, il peut être adapté à la commande d'un actionneur d'une vanne d'admission d'air d'un moteur à combustion interne ne comprenant aucun circuit EGR ou comprenant un circuit EGR à haute pression ou un circuit EGR à basse pression, et plus généralement à la commande de tout actionneur pour de faibles ouvertures lorsque l'actionneur est protégé de l'endommagement en butée par limitation de la vitesse de fermeture.

Le procédé de commande d'actionneur de vanne de recirculation partielle des gaz d'échappement comprend une étape 1 de comparaison d'une mesure de débit à une consigne de débit. Au cours d'une étape 2 suivante, on commande l'ouverture de l'actionneur afin d'annuler l'écart entre la mesure de débit et la consigne de débit.

Lorsque la commande de l'ouverture de l'actionneur est inférieure à un premier seuil prédéfini, également appelé seuil d'approche des butées (généralement égal à 2% de l'ouverture maximale), et que l'écart entre la mesure de débit d'air et la consigne de débit d'air est supérieur à un seuil, signifiant que la vanne doit être fermée, on interrompt la régulation de débit au cours d'une étape 3, sinon on poursuit le procédé à l'étape 1.

Au cours de l'étape 3, on arrête la régulation et on émet une consigne de position de l'actionneur correspondant à la fermeture de la vanne. La vanne est alors fermée avec une vitesse variant selon une cartographie mémorisée. On peut également déterminer une variation de vitesse au cours du temps formant un profil de vitesse et utiliser ce profil de vitesse lors de la fermeture de la vanne.

Le procédé de commande se poursuit alors à l'étape 4 au cours de laquelle on reprend la régulation. Pour pouvoir reprendre la régulation, il faut disposer d'un critère permettant de réactiver la régulation suffisamment tôt pour éviter une transition trop forte entre la position et le débit non régulés et la position et le débit régulés et suffisamment tôt pour éviter de déclencher une nouvelle désactivation de la régulation. Pour cela, il faut s'assurer qu'une fois réouvert, l'actionneur sera piloté avec une consigne de position supérieure au seuil d'approche des butées. On définit alors le critère suivant :

$$Q_{egr\_sp} \geq f(N, Q_{air}) \qquad\qquad (Eq.\ 1)$$

Avec Qegr_sp : la consigne de débit du circuit EGR
Qair : la mesure de débit d'air

N : la vitesse de rotation du moteur

$f(N, Q_{air})$ : la valeur de seuil

Ce critère permet de déterminer que lorsque la consigne de débit EGR est supérieure à une valeur de seuil, l'ouverture de l'actionneur correspondante sera au-dessus du seuil d'approche des butées.

$$\text{On pose } Q_{egr} = Q_{mot} - Q_{air\_sp} \qquad (Eq.\ 2)$$

Avec Qegr : le débit EGR

Qmot : le débit d'air admis dans le moteur

Qair_sp : la consigne de débit d'air

En considérant l'équation précédente (Eq. 2), on peut transformer l'équation du critère (Eq. 1) de la façon suivante :

$$Q_{mot} - Q_{air\_sp} \geq f(N, Q_{air}) \qquad (Eq.\ 3)$$

Si on considère que la vanne est fermée, on peut poser $Q_{air} = Q_{mot}$ et transformer l'équation (Eq. 3) de la façon suivante :

$$Q_{air} - Q_{air\_sp} \geq f(N, Q_{air}) \qquad (Eq.\ 4)$$

On définit l'écart de boucle d'air $\varepsilon_{Qair}$ par l'équation suivante :

$$\varepsilon_{Q_{air}} = Q_{air\_sp} - Q_{air} \qquad (Eq.\ 5)$$

Enfin, si on considère l'équation (Eq. 5) de l'écart de boucle d'air, l'équation (Eq. 4) se transforme de la façon suivante :

$$\varepsilon_{Q_{air}} \leq f(N, Q_{air}) \qquad (Eq.\ 6)$$

L'écart de boucle d'air, qui correspond à l'écart entre la mesure de débit d'air admis et la consigne de débit, est comparé à un deuxième seuil $f(N, Q_{air})$, dépendant de la vitesse de rotation du moteur et de la mesure de débit d'air admis. Lorsque l'écart de boucle d'air est inférieur ou égal au deuxième seuil, la régulation reprend à l'étape 1. Sinon, le procédé continue d'appliquer l'étape 4 jusqu'à ce que la condition soit vérifiée.

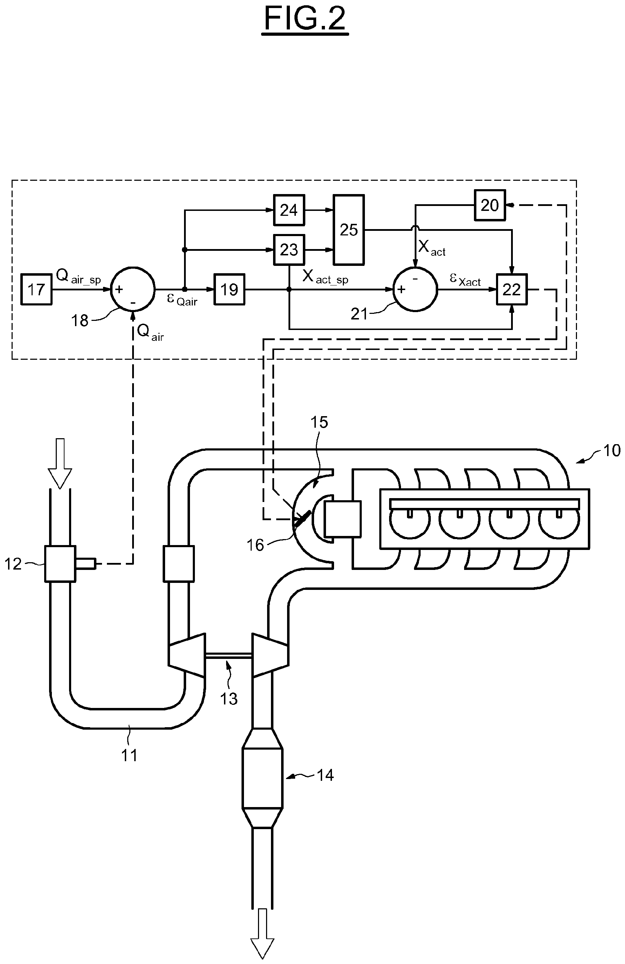

La figure 2 illustre un moteur à combustion interne 10 pour véhicule automobile relié en entrée à une conduite d'admission d'air frais 11 munie d'un moyen de mesure du débit d'air admis 12, la conduite étant reliée au compresseur d'un turbocompresseur 13, compresseur relié en sortie au collecteur d'admission du moteur à combustion interne 10. Le collecteur d'échappement du moteur à combustion interne est relié à la turbine du turbocompresseur 13, turbine reliée en sortie au collecteur d'échappement 14. Un circuit de recirculation partielle des gaz d'échappement 15 comprenant une vanne de recirculation partielle des gaz d'échappement 16 est piqué entre le collecteur d'échappement et le collecteur d'admission formant un circuit de recirculation partielle des gaz d'échappement à haute pression.

Le moteur à combustion interne est commandé par un moyen de commande des gaz admis 17 apte à déterminer une consigne d'air admis Qair_sp et par un moyen de commande 20 de l'actionneur de la vanne de recirculation partielle des gaz d'échappement apte à empêcher l'endommagement de la vanne.

Le système de commande comprend un moyen de comparaison de la mesure de débit à une consigne de débit 19 recevant en entrée du soustracteur 18 la différence $\varepsilon_{Qair}$ entre la consigne de débit Qair_sp et la mesure de débit Qair et émettant en sortie une consigne de position de l'actionneur Xact_sp. Le système de commande comprend par ailleurs un moyen de commande de l'actionneur 22 apte à annuler l'écart $\varepsilon_{Xact}$ entre la consigne de position de l'actionneur Xact_sp et la mesure de position de l'actionneur Xact, reçu du soustracteur 21. La position de l'actionneur Xact est déterminée par un moyen de détermination de la position de l'actionneur 20. Le moyen de commande de l'actionneur 22 émet en sortie une commande à destination de l'actionneur de la vanne de recirculation partielle des gaz d'échappement. Le moyen de commande 22 de l'actionneur reçoit par ailleurs la valeur de la consigne de position de l'actionneur émise par le moyen de comparaison de la mesure de débit à une consigne de débit 19.

Lorsque l'ouverture de la vanne est grande, la commande de l'actionneur permet de réduire l'écart entre la consigne de position et la position déterminée.

Lorsque l'ouverture résultant de la consigne de position est inférieure à un premier seuil, également appelé seuil d'approche des butées, généralement égal à 2% de l'ouverture maximale de la vanne, le moyen de commande 22 de l'actionneur émet une commande de fermeture de l'actionneur selon un profil de vitesse protégeant la vanne d'un endommagement.

Le profil de vitesse, qui est une variation de la vitesse de fermeture de la vanne en fonction du temps, ou également une variation de vitesse de déplacement de l'actionneur en fonction du temps peut être déterminée à partir d'une cartographie mémorisée ou d'un moyen de détermination.

Un moyen de détermination 23 d'une interruption de régulation prédéfini reçoit en entrée la valeur de la consigne de position de l'actionneur Xact_sp provenant du moyen de comparaison 19 de la mesure de débit à une consigne de débit. Le moyen de détermination 23 d'une interruption de régulation compare la consigne de position de l'actionneur Xact_sp au premier seuil. Le moyen de détermination 23 d'une interruption de régulation reçoit par ailleurs l'écart de débit d'air émis par le soustracteur 18.

Lorsque la commande de l'ouverture de l'actionneur est inférieure à un premier seuil prédéfini, également appelé seuil d'approche des butées (généralement égal à 2% de l'ouverture maximale), et que l'écart entre la mesure de débit d'air et la consigne de débit d'air est supérieur à un seuil, signifiant que la vanne doit être fermée, le moyen de détermination 23 d'une interruption de régulation émet un signal logique d'interruption de la régulation de débit.

Un moyen de détermination 24 d'une reprise de régulation reçoit en entrée l'écart entre la mesure de débit et la consigne de débit provenant du soustracteur 18 et le compare au deuxième seuil par application de l'équation 6. Un signal logique de reprise de régulation est émis en sortie en fonction du résultat de la comparaison.

Le système de commande peut comprendre un moyen de détermination du deuxième seuil en fonction de la vitesse de rotation du moteur et de la mesure de débit d'air admis.

Le moyen de détermination 23 d'une interruption de régulation et le moyen de détermination 24 d'une reprise de régulation sont reliés en sortie à un moyen de commande 25 de la régulation de débit. Selon le signal logique du moyen de détermination 23 d'une interruption de régulation reçu en entrée, le moyen de commande 25 de la régulation de débit émet un signal de désactivation de la régulation à destination du moyen de commande 22 de l'actionneur et une consigne de position de l'actionneur menant à la fermeture de la vanne. Il en résulte que le moyen de commande 22 de l'actionneur n'asservit plus la position de l'actionneur sur la consigne de position par l'intermédiaire de l'écart de position $\varepsilon_{Xact}$.

Selon le signal logique du moyen de détermination 24 d'une reprise de régulation reçu en entrée, le moyen de commande 25 de la régulation de débit émet en sortie un signal de réaction de la régulation à destination du moyen de commande 22 de l'actionneur. Il en résulte que le moyen de commande 22 de l'actionneur asservit à nouveau la position de l'actionneur sur la consigne de position par l'intermédiaire de l'écart de position $\varepsilon_{Xact}$.

Le procédé et le système de commande permettent ainsi de limiter les oscillations du débit d'air afin de concilier le confort des utilisateurs du véhicule et la protection des vannes et soupapes.

## Revendications

1. Procédé de commande de l'actionneur d'une vanne de recirculation partielle des gaz d'échappement dans un moteur à combustion interne pour véhicule automobile muni d'au moins un moyen de mesure du débit d'air admis et d'au moins un circuit de recirculation partielle des gaz d'échappement comprenant ladite vanne, le procédé de commande comprenant des étapes au cours desquelles on compare une mesure de débit d'air à une consigne de débit d'air, et on commande l'ouverture de l'actionneur afin d'annuler l'écart entre la mesure de débit d'air et la consigne de débit d'air,

   le procédé étant **caractérisé en ce qu'**il comprend en outre les étapes suivantes :

   lorsque la commande de l'ouverture de l'actionneur est inférieure à un premier seuil prédéfini, appelé seuil d'approche des butées, et que l'écart entre la mesure de débit d'air et la consigne de débit d'air est supérieur à un deuxième seuil, on interrompt la régulation de débit, et

   pour interrompre la régulation de débit, on arrête la régulation et on émet une consigne de position de l'actionneur menant à la fermeture de la vanne selon un profil de vitesse protégeant la vanne d'un endommagement, et

   lorsque l'écart entre la mesure de débit d'air et la consigne de débit d'air est inférieur au deuxième seuil et que la régulation a été interrompue, on reprend la régulation de débit.

**2.** Procédé selon la revendication 1, dans lequel le deuxième seuil dépend de la vitesse de rotation du moteur et de la mesure de débit d'air admis.

**3.** Procédé de commande selon l'une quelconque des revendications précédentes, dans lequel on ferme la vanne avec une vitesse variant selon une cartographie mémorisée.

**4.** Procédé de commande selon l'une quelconque des revendications 1 ou 2, dans lequel on détermine une vitesse de fermeture de la vanne variant en fonction du temps et on ferme la vanne en appliquant la variation de vitesse.

**5.** Système de commande de l'actionneur d'une vanne de recirculation partielle des gaz d'échappement (16) dans un moteur à combustion interne (10) pour véhicule automobile muni d'au moins un moyen de mesure du débit d'air admis (12) et d'au moins un circuit de recirculation partielle des gaz d'échappement (15) comprenant ladite vanne (16), le moteur à combustion interne étant commandé par un moyen de commande des gaz admis (17) apte à déterminer une consigne de débit d'air admis,
le système de commande comprenant un moyen de comparaison (19) de la mesure de débit d'air à la consigne de débit d'air apte à émettre une consigne de position de l'actionneur, et un moyen de commande de l'actionneur (22) apte, d'une part, à réguler l'écart entre une mesure de position de l'actionneur et la consigne de position de l'actionneur et, d'autre part, à empêcher l'endommagement de la vanne à l'approche des butées,
le système de commande étant **caractérisé par le fait qu'**il comprend en outre :

un moyen de détermination (23) d'une interruption de régulation et un moyen de détermination (24) d'une reprise de régulation reliés en sortie à un moyen de commande (25) de la régulation de débit, aptes à arrêter la régulation du moyen de commande de l'actionneur (22), à émettre une consigne de position de l'actionneur menant à la fermeture de la vanne selon un profil de vitesse protégeant la vanne d'un endommagement et à reprendre la régulation du moyen de commande de l'actionneur (22).

**6.** Système selon la revendication 5, dans lequel le moyen de détermination (23) d'une interruption de régulation est apte à émettre un signal logique en fonction de la consigne de position de l'actionneur, de l'écart entre la consigne de débit et la mesure de débit et un premier seuil.

**7.** Système selon l'une des revendications 5 ou 6, dans lequel un moyen de détermination (24) d'une reprise de régulation est apte à émettre un signal logique en fonction de la comparaison de l'écart entre la mesure de débit et la consigne de débit à un deuxième seuil.

**8.** Système selon l'une quelconque des revendications 5 à 7, comprenant un moyen de détermination du deuxième seuil en fonction de la vitesse de rotation du moteur et de la mesure de débit d'air admis.

**9.** Système de commande selon l'une quelconque des revendications 5 à 8, comprenant une cartographie mémorisée de la vitesse de fermeture de la vanne en fonction du temps.

**10.** Système de commande selon l'une quelconque des revendications 5 à 8, comprenant un moyen de détermination de la vitesse de fermeture de la vanne en fonction du temps.

**Patentansprüche**

**1.** Verfahren zur Steuerung des Stellantriebs eines Ventils zur Teilrückführung der Abgase in einen Kraftfahrzeug-Verbrennungsmotor, der mit mindestens einer Einrichtung zur Messung der angesaugten Luftmenge und mit mindestens einem Teilrückführungskreislauf der Abgase versehen ist, der das Ventil enthält, wobei das Steuerverfahren Schritte enthält, während denen ein Luftmengenmesswert mit einem Luftmengensollwert verglichen und die Öffnung des Stellantriebs gesteuert wird, um die Abweichung zwischen dem Luftmengenmesswert und dem Luftmengensollwert aufzuheben,
wobei das Verfahren **dadurch gekennzeichnet ist, dass** es außerdem die folgenden Schritte enthält:

wenn die Steuerung der Öffnung des Stellantriebs unter einem ersten vordefinierten Schwellwert liegt, Annäherungsschwellwert der Anschläge genannt, und wenn die Abweichung zwischen dem Luftmengenmesswert und dem Luftmengensollwert höher als ein zweiter Schwellwert ist, die Mengenregelung unterbrochen wird, und um die Mengenregelung zu unterbrechen, die Regelung angehalten und ein Positionssollwert des Stellantriebs emittiert wird, der zum Schließen des Ventils gemäß einem Geschwindigkeitsprofil führt, das das Ventil vor einer Beschädigung schützt, und

wenn die Abweichung zwischen dem Luftmengenmesswert und dem Luftmengensollwert niedriger als der zweite Schwellwert ist und die Regelung unterbrochen wurde, die Mengenregelung wieder aufgenommen wird.

2. Verfahren nach Anspruch 1, wobei der zweite Schwellwert von der Drehgeschwindigkeit des Motors und vom Messwert der angesaugten Luftmenge abhängt.

3. Steuerverfahren nach einem der vorhergehenden Ansprüche, wobei das Ventil mit einer Geschwindigkeit geschlossen wird, die sich gemäß einem gespeicherten Kennfeld ändert.

4. Steuerverfahren nach einem der Ansprüche 1 oder 2, wobei eine Schließgeschwindigkeit des Ventils bestimmt wird, die sich zeitabhängig ändert, und das Ventil unter Anwendung der Geschwindigkeitsänderung geschlossen wird.

5. System zur Steuerung des Stellantriebs eines Ventils zur Teilrückführung der Abgase (16) in einen Kraftfahrzeug-Verbrennungsmotor (10), der mit mindestens einer Einrichtung zur Messung der angesaugten Luftmenge (12) und mit mindestens einem Teilrückführungskreislauf der Abgase (15) versehen ist, der das Ventil (16) enthält, wobei der Verbrennungsmotor von einer Steuereinrichtung der angesaugten Gase (17) gesteuert wird, die einen Sollwert angesaugter Luftmenge bestimmen kann,

wobei das Steuersystem eine Vergleichseinrichtung (19) des Luftmengenmesswerts mit dem Luftmengensollwert, die einen Positionssollwert des Stellantriebs emittieren kann, und eine Steuereinrichtung des Stellantriebs (22) enthält, die einerseits die Abweichung zwischen einer Positionsmessung des Stellantriebs und dem Positionssollwert des Stellantriebs regeln und andererseits die Beschädigung des Ventils bei der Annäherung der Anschläge verhindern kann,

wobei das Steuersystem **dadurch gekennzeichnet ist, dass** es außerdem enthält

eine Bestimmungseinrichtung (23) einer Regelungsunterbrechung und eine Bestimmungseinrichtung (24) einer Regelungswiederaufnahme, die am Ausgang mit einer Steuereinrichtung (25) der Mengenregelung verbunden sind, die die Regelung der Steuereinrichtung des Stellantriebs (22) anhalten, einen Positionssollwert des Stellantriebs emittieren, der zum Schließen des Ventils gemäß einem Geschwindigkeitsprofil führt, das das Ventil vor einer Beschädigung schützt, und die Regelung der Steuereinrichtung des Stellantriebs (22) wieder aufnehmen können.

6. System nach Anspruch 5, wobei die Bestimmungseinrichtung (23) einer Regelungsunterbrechung ein logisches Signal abhängig vom Positionssollwert des Stellantriebs, der Abweichung zwischen dem Mengensollwert und dem Mengenmesswert und einem ersten Schwellwert emittieren kann.

7. System nach einem der Ansprüche 5 oder 6, wobei eine Bestimmungseinrichtung (24) einer Regelungswiederaufnahme ein logisches Signal abhängig vom Vergleich der Abweichung zwischen dem Mengenmesswert und dem Mengensollwert mit einem zweiten Schwellwert emittieren kann.

8. System nach einem der Ansprüche 5 bis 7, das eine Bestimmungseinrichtung des zweiten Schwellwerts abhängig von der Drehgeschwindigkeit des Motors und vom Messwert der der angesaugten Luftmenge enthält.

9. Steuersystem nach einem der Ansprüche 5 bis 8, das ein gespeichertes Kennfeld der Schließgeschwindigkeit des Ventils abhängig von der Zeit enthält.

10. Steuersystem nach einem der Ansprüche 5 bis 8, das eine Bestimmungseinrichtung der Schließgeschwindigkeit des Ventils abhängig von der Zeit enthält.

**Claims**

1. Method for controlling the actuator of a partial exhaust gas recirculation valve in an internal combustion engine for a motor vehicle equipped with at least one means for measuring the intake air flow and at least one partial exhaust gas recirculation circuit comprising said valve, the control method comprising steps during which a measured air flow is compared with a reference air flow, and the opening of the actuator is controlled in order to eliminate the difference between the measured air flow and the reference air flow,

the method being **characterized in that** it also comprises the following steps:

when the actuator opening control is smaller than a first predefined threshold, called the stop approach threshold, and the difference between the measured air flow and the reference air flow is greater than a second threshold, the flow regulation is interrupted, and

to interrupt the flow regulation, the regulation is stopped and a reference actuator position is output which leads to closure of the valve according to a speed profile which protects the valve from damage, and

when the difference between the measured air flow and the reference air flow is smaller than the second threshold and regulation has been interrupted, the flow regulation is resumed.

2. Method according to Claim 1, wherein the second threshold depends on the engine rotation speed and the measured intake air flow.

3. Control method according to any of the preceding claims, wherein the valve is closed with a speed which varies according to a stored map.

4. Control method according to any of Claims 1 and 2, wherein a closing speed of the valve is determined which varies as a function of time, and the valve is closed with application of the speed variation.

5. System for controlling the actuator of a partial exhaust gas recirculation valve (16) in an internal combustion engine (10) for a motor vehicle equipped with at least one means (12) for measuring the intake air flow and at least one partial exhaust gas recirculation circuit (15) comprising said valve (16), the internal combustion engine being controlled by a means (17) for controlling the intake gases which is able to determine a setpoint for the intake air flow, the control system comprising a means (19) for comparing the measured air flow with the reference air flow which is able to output a reference actuator position, and an actuator control means (22) which is able firstly to regulate the difference between a measured actuator position and the reference actuator position, and secondly to prevent damage to the valve at the approach of the stops,

the control system being **characterized in that** it also comprises:

a means (23) for determining an interruption in regulation and a means (24) for determining a resumption of regulation which are connected at the output to a means (25) for controlling the flow regulation, these means being able to stop the regulation of the actuator control means (22), to output a reference actuator position leading to closure of the valve according to a speed profile which protects the valve from damage, and to resume the regulation of the actuator control means (22).

6. System according to Claim 5, wherein the means (23) for determining an interruption in regulation is able to output a logic signal as a function of the reference actuator position, the difference between the reference flow and the measured flow, and a first threshold.

7. System according to one of Claims 5 and 6, wherein a means (24) for determining a resumption of regulation is able to output a logic signal as a function of the comparison of the difference between the measured flow and the reference flow with a second threshold.

8. System according to any of Claims 5 to 7, comprising a means for determining the second threshold as a function of the engine rotation speed and the measured intake air flow.

9. Control system according to any of Claims 5 to 8, comprising a stored map of the closing speed of the valve as a function of time.

10. Control system according to any of Claims 5 to 8, comprising a means for determining the closing speed of the valve as a function of time.

# FIG.1

```
┌─────────────┐
│      1      │
└─────────────┘
       │
       ▼
┌─────────────┐
│      2      │
└─────────────┘
       │
       ▼
┌─────────────┐
│      3      │
└─────────────┘
       │
       ▼
┌─────────────┐
│      4      │
└─────────────┘
       │
       ▼
┌─────────────┐
│      5      │
└─────────────┘
```

# FIG.2

**EP 2 776 693 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2753488